# FASCICULE DE BREVET EUROPEEN

(11) **EP 2 090 149 B1**
(45) Date de publication et mention de la délivrance du brevet: **22.12.2010**
(21) Numéro de dépôt: 08020294.8
(22) Date de dépôt: 21.11.2008
(51) Int. Cl.: A01D 33/10

(54) **Engin agricole pour la récolte des produits en terre**
Landwirtschaftliche Maschine für die Ernte von Produkten in der Erde
Farm machine for harvesting products from the soil

(30) Priorité: 13.02.2008 FR 0800771
(43) Date de publication de la demande: 19.08.2009
(73) Titulaire: EXEL INDUSTRIES, 51206 Epernay Cedex (FR)
(72) Inventeur: Ballu, Patrick Jean Marie, 51100 Reims (FR)
(74) Mandataire: Gaillarde, Frédéric F. Ch.

(56) Documents cités:
- DE-A1- 1 482 245
- GB-A- 1 058 191

## Description

La présente invention se rapporte à un engin agricole pour la récolte des produits en terre.

On connaît de la technique antérieure un engin agricole pour la récolte des produits en terre, comprenant une trémie de stockage munie d'un fond mouvant.

Un tel engin agricole peut être utilisé notamment dans le domaine de la récolte des betteraves (on parle alors couramment d"'arracheuse de betteraves").

La trémie de stockage reçoit les produits récoltés, et le fond mouvant de cette trémie permet d'une part de parfaire le nettoyage de la terre qui se trouve sur ces produits, et d'autre part d'acheminer ces produits vers une unité de transport (benne ou autre) évoluant de concert avec l'engin agricole.

Bien qu'avantageux, un tel fond mouvant présente certains inconvénients.

Tout d'abord, ce fond mouvant, qui occupe la totalité du fond de la trémie, conduit à une perte du volume de stockage dans la trémie, et représente globalement un poids mort non négligeable.

La présente invention a notamment pour but de fournir un engin agricole dont la trémie ne présente pas ces inconvénients.

On atteint ce but de l'invention avec un engin agricole pour la récolte des produits en terre, comprenant une trémie de stockage munie d'un fond mouvant, remarquable en ce que ledit fond mouvant ne s'étend que sur une partie du fond de cette trémie, et en ce que l'autre partie de cette trémie est montée mobile entre une position normale dans laquelle le fond de cette autre partie est sensiblement horizontal, et une position spéciale dans laquelle le fond de cette autre partie est incliné par rapport à l'horizontale.

Grâce à ces caractéristiques, le fond mouvant présente une surface réduite par rapport à l'état de la technique, ce qui permet de gagner en volume de stockage disponible et en poids.

L'acheminement correct vers le fond mouvant des produits récoltés peut être réalisé par basculement de ladite autre partie de trémie de sa position normale à sa position spéciale : ceci a pour effet de faire glisser les produits situés dans ladite autre partie de trémie vers le fond mouvant.

On notera en outre que les caractéristiques de l'invention permettent de réaliser une trémie aux formes plus simples : il n'est en effet pas nécessaire que ladite autre partie de trémie présente des parois latérales inclinées, puisque c'est son mouvement de basculement qui assure le glissement des produits récoltés en direction du fond mouvant.

L'invention permet en outre de décaler le fond mouvant par rapport à d'autres outils susceptibles de se trouver sous ce fond, tels que des turbines de nettoyage dans le cas d'une arracheuse de betterave : on évite de la sorte de re-souiller les produits ayant déjà subi un nettoyage, et de poser de la terre sur les structures porteuses.

L'invention permet également de décaler la répartition du poids sur les essieux de l'engin agricole, et en particulier de soulager l'essieu avant d'une arracheuse de betterave, essieu sur lequel pèsent déjà tous les outils d'effeuillage/scalpage/arrachage/nettoyage.

Cet allègement peut même être accru en maintenant ladite autre partie de trémie en permanence dans sa position spéciale.

Suivant d'autres caractéristiques optionnelles de l'invention :
- ledit fond mouvant comprend au moins un tapis transporteur : il s'agit là d'un mode de réalisation couramment utilisé notamment pour les arracheuses de betteraves. Un tel tapis est en général formé par des barres montées sur des chaînes latérales, de manière à permettre à la terre qui se trouve encore sur les produits récoltés de s'échapper à travers ces barres;
- ledit fond mouvant comprend un tapis transporteur longitudinal et un tapis transporteur transversal : dans cet agencement, couramment utilisé pour les arracheuses de betteraves, le tapis transversal (par rapport à la direction d'avancement de l'engin) permet l'évacuation des produits récoltés vers une unité de transport (benne ou autre) évoluant de concert avec l'engin agricole;
- cet engin agricole comprend un élévateur débouchant sur ledit tapis transporteur longitudinal: cet agencement, couramment utilisé dans le domaine des machines à arracher les betteraves, permet d'élever les produits récoltés du niveau des moyens de convoyage (turbines ou autres) vers la trémie, de manière que ces produits tombent sur le tapis transporteur longitudinal;

- ledit tapis transporteur longitudinal est disposé à l'avant dudit tapis transporteur transversal, et ladite autre partie de trémie est disposée à l'avant de ladite trémie;
- ladite autre partie de trémie présente une forme simple telle qu'une forme parallélépipédique: ceci permet de réduire le coût de fabrication global de la trémie;
- cet engin agricole comprend des moyens d'actionnement pour faire passer ladite autre partie de trémie de sa position normale vers sa position spéciale, ces moyens d'actionnement pouvant comprendre notamment au moins un vérin hydraulique : ces moyens d'actionnement permettent de faire basculer très simplement ladite autre partie de trémie entre ses deux positions extrêmes, ou vers une position intermédiaire;
- cet engin agricole est adapté pour récolter les betteraves : bien que non limitée à cette application, la présente invention y trouve toute son utilité;
- cet engin agricole est automoteur.

D'autres caractéristiques et avantages de la présente invention apparaîtront à la lumière de la description qui va suivre et à l'examen des figures ci-annexées dans lesquelles :
- la figure 1 représente, de manière schématique, une arracheuse à betteraves automotrice, de la technique antérieure, les outils de récolte (effeuillage, scalpage, arrachage) étant en principe fixés sur la partie de cet engin située à gauche de la figure 1. Ces outils de récolte n'ont toutefois pas été représentés, dans un souci de simplification du présent exposé ;
- la figure 2 est une vue de dessus de l'engin agricole de la figure 1 ;
- la figure 3 est une vue analogue à celle de la figure 1 d'un engin agricole selon l'invention ; et
- la figure 4 est une vue analogue à celle de la figure 2 de cet engin agricole selon l'invention.

Sur l'ensemble des figures ci-annexées, les références identiques ou analogues désignent des organes ou ensembles d'organes identiques ou analogues.

On notera également que l'exposé qui va suivre repose sur un engin agricole particulier, à savoir une arracheuse de betteraves, et que l'invention s'étend bien entendu à tout autre engin agricole à trémie de stockage et à fond mouvant (machine à récolter les pommes de terre, par exemple).

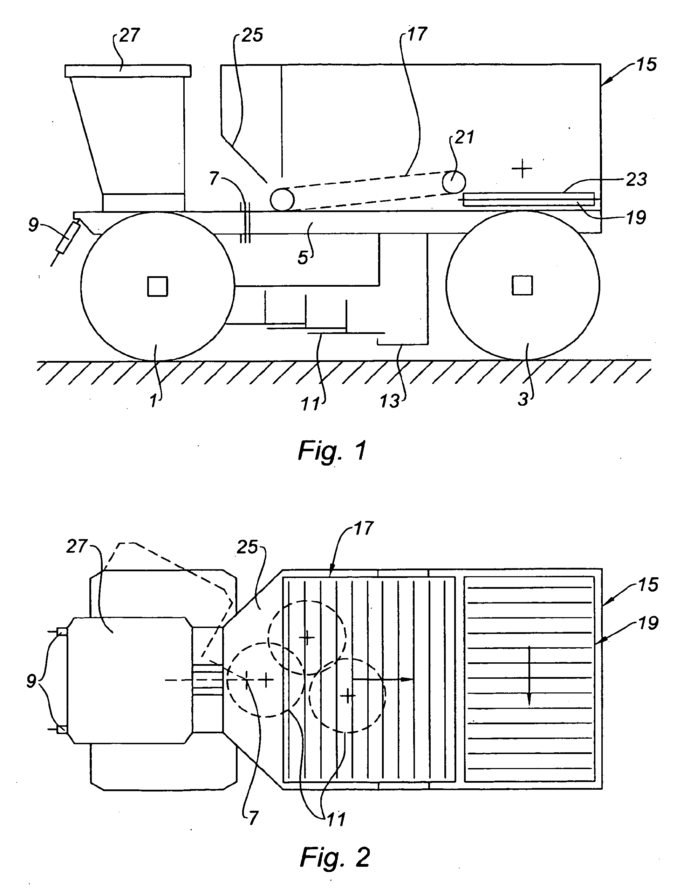

En se reportant à la figure 1, on peut donc voir une arracheuse de betteraves automotrice.

Plus précisément, cet engin comporte deux essieux 1, 3 sur lesquels est monté un châssis 5 pouvant être articulé autour d'un axe vertical 7.

Au moins l'un des deux essieux 1, 3 est moteur, permettant les déplacements de l'arracheuse.

A l'avant de cet engin, c'est-à-dire sur la gauche de la figure 1, sont en principe fixés les outils de récolte des betteraves, notamment au moyen d'un ou plusieurs vérins de réglage 9.

Dans un souci de simplification de l'exposé, ces outils, qui comprennent classiquement une effeuilleuse, des scalpeurs, une arracheuse et un groupe nettoyeur, n'ont pas été représentés.

A l'arrière de ces outils de récolte se trouvent les outils de convoyage et de nettoyage, pouvant comprendre notamment un tapis de transfert (dissimulé par l'essieu 1) et une pluralité de turbines 11, consistant en fait en grilles rotatives permettant de convoyer et de nettoyer les betteraves du tapis de transfert vers un élévateur 13.

Cet élévateur 13 permet d'acheminer les betteraves issues des turbines 11 au-dessus du châssis 5, et plus précisément à l'intérieur d'une trémie 15 qui est montée sur ce châssis 5.

Cette trémie 15 comporte un fond mouvant, c'est-à-dire un fond permettant de déplacer les betteraves provenant de l'élévateur 13.

Plus précisément, ce fond mouvant comprend d'une part un tapis transporteur longitudinal 17, et d'autre part un tapis transversal 19.

Par longitudinal et transversal on entend respectivement sensiblement parallèle et perpendiculaire à la direction d'avancement de l'arracheuse.

Comme cela est connu en soi, chacun de ces tapis peut comprendre des chaînes sur lesquelles sont montées des barres métalliques, ces chaînes étant actionnées par des rouleaux 21, 23.

Le tapis longitudinal 17 permet de déplacer vers l'arrière de la trémie 15 les betteraves qui ont été acheminées par l'élévateur 13 et le tapis transporteur transversal 19 permet d'évacuer ces betteraves vers une unité de transport pouvant se déplacer de concert avec l'arracheuse de betteraves, telle qu'une benne tirée par un tracteur.

On notera que la partie avant de la trémie 15 comporte une zone en pente 25, permettant de faire glisser les betteraves situées dans cette partie avant vers le tapis transporteur longitudinal 17.

Une cabine 27 permet de piloter l'arracheuse et de superviser l'ensemble des opérations mises en oeuvre.

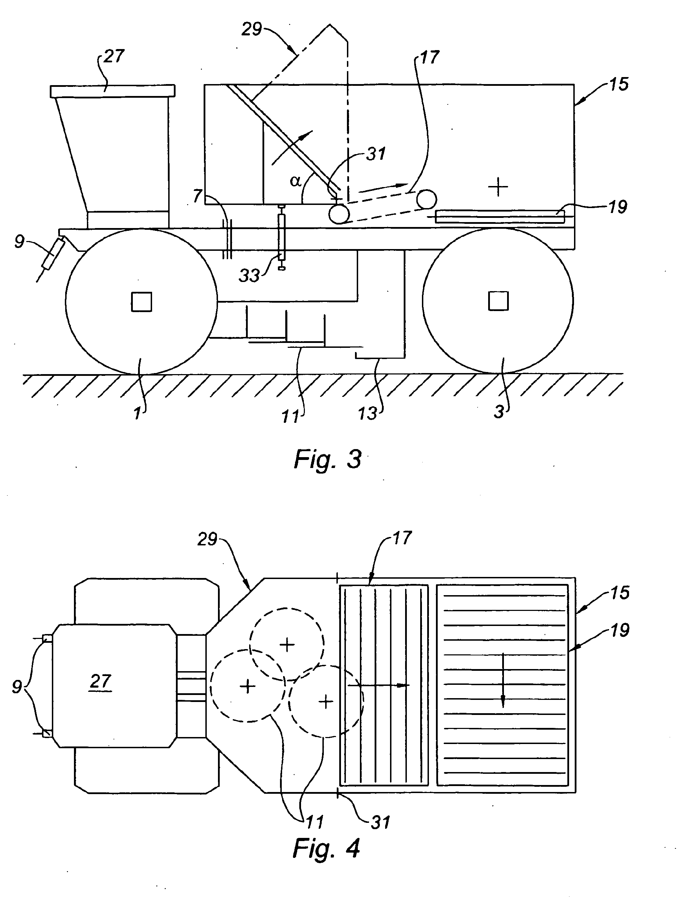

En se reportant aux figures 3 et 4, on peut voir que, dans l'arracheuse selon l'invention, le tapis transporteur longitudinal 17 est plus court, c'est-à-dire qu'il s'étend sur une distance longitudinale moindre par rapport à celui de l'état de la technique.

Précisément, comme cela est représenté, ce tapis transporteur longitudinal s'étend pratiquement juste au droit de l'élévateur 13.

En avant de ce tapis transporteur longitudinal 17, la trémie 15 comporte une partie avant 29 basculante.

Plus précisément, cette partie avant de trémie 29 est montée pivotante autour d'un axe transversal 31, entre une position normale représentée en trait plein dans laquelle cette partie avant de trémie est disposée de manière sensiblement horizontale, c'est-à-dire coplanaire avec le fond mouvant, et une position spéciale représentée en trait mixte, dans laquelle cette partie avant de trémie forme un angle α prononcé par rapport à l'horizontale (la direction horizontale s'entendant lorsque les deux essieux 1 et 3 reposent sur un sol horizontal).

Des moyens d'actionnement tels qu'un ou plusieurs vérins 33 permettent de faire passer cette partie avant de trémie 29 de l'une à l'autre de ces deux positions extrêmes, étant entendu que toute position intermédiaire peut être envisagée.

On remarquera, que, de manière avantageuse, la géométrie de la partie avant de trémie 29 est très simple, et notamment que cette partie avant de trémie ne comporte plus de paroi en pente comme c'était le cas pour la paroi 25 représentée sur la figure 1.

Le mode de fonctionnement et les avantages de l'engin agricole selon l'invention résultent directement de la description qui précède.

Du fait que dans l'invention le tapis transporteur longitudinal 17 s'étend sur une moindre longueur que celui de l'état de la technique, on peut gagner en poids, ainsi qu'en volume de stockage à l'intérieur de la trémie.

En ce qui concerne les betteraves qui arrivent dans la partie avant 29 de trémie à leur sortie de l'élévateur 13, il suffit, de temps à autre, de faire basculer cette partie avant de trémie de sa position normale vers sa position spéciale, pour rabattre les betteraves sur le tapis transporteur longitudinal 17.

Dans certaines conditions particulièrement difficiles ou il n'est pas souhaitable de trop charger l'essieu avant 1 de l'arracheuse de betteraves, on peut même envisager de placer la partie avant de trémie 29 en permanence dans sa position spéciale, de manière que les betteraves acheminées par l'élévateur 13 viennent uniquement sur le tapis transporteur longitudinal 17, et ne constituent pas de poids mort vers l'avant de la trémie 15.

On remarquera également que, du fait de sa plus faible longueur, le tapis transporteur longitudinal 17 est essentiellement ramassé en arrière des turbines 11, permettant ainsi d'éviter de faire tomber de la terre sur ces turbines et ainsi de souiller inutilement les betteraves qui circulent sur ces turbines, et d'éviter du poids mort inutile.

De manière avantageuse également, on remarquera que le basculement de la partie avant de trémie 15 permet d'éviter tout dépôt de terre à l'avant de la trêmie, contrairement à ce que l'on pouvait constater dans les arracheuses de betterave de la technique antérieure (dans la zone située entre la paroi en pente 25 et le tapis transporteur longitudinal).

Bien entendu, la présente invention n'est nullement limitée au mode de réalisation décrit et représenté, fourni à titre de simple exemple.

## Revendications

1. Engin agricole pour la récolte des produits en terre, comprenant une trémie de stockage (15) munie d'un fond mouvant (17, 19), **caractérisé en ce que** ledit fond mouvant ne s'étend que sur une partie du fond de cette trémie, et **en ce que** l'autre partie (29) de cette trémie est montée mobile entre une position normale dans laquelle le fond de cette autre partie est sensiblement horizontal, et une position spéciale dans laquelle le fond de cette autre partie (29) est incliné (α) par rapport à l'horizontale.

2. Engin agricole selon la revendication 1, **caractérisé en ce que** ledit fond mouvant comprend au moins un tapis transporteur (17, 19).

3. Engin agricole selon la revendication 2, **caractérisé en ce que** ledit fond mouvant comprend un tapis transporteur longitudinal (17) et un tapis transporteur transversal (19).

4. Engin agricole selon la revendication 3, **caractérisé en ce qu'**il comprend un élévateur (13) débouchant sur ledit tapis transporteur longitudinal (17).

5. Engin agricole selon l'une des revendications 3 ou 4, **caractérisé en ce que** ledit tapis transporteur longitudinal (17) est disposé à l'avant dudit tapis transporteur transversal (19), et **en ce que** ladite autre partie de trémie (29) est disposée à l'avant de ladite trémie (15).

6. Engin agricole selon l'une quelconque des revendications précédentes, **caractérisé en ce que** ladite autre partie de trémie (29) présente une forme simple telle qu'une forme parallélépipédique.

7. Engin agricole selon l'une quelconque des revendications précédentes, **caractérisé en ce qu'**il comprend des moyens d'actionnement pour faire passer ladite autre partie de trémie de sa position normale vers sa position spéciale, ces moyens d'actionnement pouvant comprendre notamment au moins un vérin hydraulique (33).

8. Engin agricole selon l'une quelconque des revendications précédentes, **caractérisé en ce qu'**il est adapté pour récolter les betteraves.

9. Engin agricole selon l'une quelconque des revendications précédentes, **caractérisé en ce qu'**il est automoteur.

## Claims

1. Farm machine for harvesting products from the soil, comprising a collecting container (15) equipped with a moving base (17, 19), **characterised in that** said moving base extends only over part of the base of this container, and **in that** the other part (29) of this container is mounted so as to be able to move between a normal position, in which the base of this other part is substantially horizontal, and a special position, in which the base of this other part (29) is inclined (α) with respect to the horizontal.

2. Farm machine according to claim 1, **characterised in that** said moving base comprises at least one conveyor belt (17, 19).

3. Farm machine according to claim 2, **characterised in that** said moving base comprises a longitudinal conveyor belt (17) and a transverse conveyor belt (19).

4. Farm machine according to claim 3, **characterised in that** it comprises an elevator (13) opening onto said longitudinal conveyor belt (17).

5. Farm machine according to one of claims 3 or 4, **characterised in that** said longitudinal conveyor belt (17) is arranged in front of said transverse conveyor belt (19), and **in that** said other container part (29) is arranged in front of said container (15).

6. Farm machine according to any one of the preceding claims, **characterised in that** said other container part (29) has a simple shape such as a parallelepiped shape.

7. Farm machine according to any one of the preceding claims, **characterised in that** it comprises actuation means for causing said other container part to move from its normal position to its special position, it being possible for these actuation means to comprise in particular at least one hydraulic cylinder (33).

8. Farm machine according to any one of the preceding claims, **characterised in that** it is suitable for harvesting beetroot.

9. Farm machine according to any one of the preceding claims, **characterised in that** it is self-propelled.

## Patentansprüche

1. Landwirtschaftliches Gerät für die Ernte von Produkten im Boden, das ein mit einem sich bewegenden Boden (17, 19) ausgestattetes Lagersilo (15) umfasst, **dadurch gekennzeichnet, dass** sich der bewegende Boden nur über einen Abschnitt des Bodens dieses Silos erstreckt und **dadurch**, dass der andere Abschnitt (29) dieses Silos bewegbar zwischen einer normalen Position, in der der Boden dieses anderen Abschnitts etwa horizontal ist, und einer speziellen Position, in der der Boden dieses anderen Abschnitts (29) im Verhältnis zur Horizontalen geneigt ist (α), montiert ist.

2. Landwirtschaftliches Gerät nach Anspruch 1, **dadurch gekennzeichnet, dass** der sich bewegende Boden mindestens ein Transportband (17, 19) umfasst.

3. Landwirtschaftliches Gerät nach Anspruch 2, **dadurch gekennzeichnet, dass** der sich bewegende Boden ein Längs-Transportband (17) und ein Quer-Transportband (19) umfasst.

4. Landwirtschaftliches Gerät nach Anspruch 3, **dadurch gekennzeichnet, dass** es ein Hubgerät (13) umfasst, das auf dem Längs-Transportband (17) mündet.

5. Landwirtschaftliches Gerät nach einem der Ansprüche 3 oder 4, **dadurch gekennzeichnet, dass** das Längs-Transportband (17) vor dem Quer-Transportband (19) angeordnet ist, und **dadurch**, dass der andere Siloabschnitt (29) vor dem Silo (15) angeordnet ist.

6. Landwirtschaftliches Gerät nach einem der vorangehenden Ansprüche, **dadurch gekennzeichnet, dass** der andere Siloabschnitt (29) eine einfache Form wie eine parallelepipedische Form aufweist.

7. Landwirtschaftliches Gerät nach einem der vorangehenden Ansprüche, **dadurch gekennzeichnet, dass** es Betätigungsmittel umfasst, um zu veranlassen, dass der andere Siloabschnitt aus seiner normalen Position in seine spezielle Position wechselt, wobei diese Betätigungsmittel vor allem mindestens einen Hydraulikzylinder (33) umfassen können.

8. Landwirtschaftliches Gerät nach einem der vorhergehenden Ansprüche, **dadurch gekennzeichnet, dass** es für die Rübenernte geeignet ist.

9. Landwirtschaftliches Gerät nach einem der vorangehenden Ansprüche, **dadurch gekennzeichnet, dass** es selbstfahrend ist.
